# EUROPEAN PATENT APPLICATION

(11) **EP 4 478 755 A1**
(43) Date of publication of application: **18.12.2024**
(21) Application number: 22925411.5
(22) Date of filing: 11.02.2022
(51) Int. Cl.: H04W 8/14

(54) **RELATIONSHIP INDICATION METHOD AND DEVICE, INFORMATION TRANSMISSION METHOD AND DEVICE, COMMUNICATION DEVICE, AND STORAGE MEDIUM**

(71) Applicant: Beijing Xiaomi Mobile Software Co., Ltd., Beijing 100085 (CN)
(72) Inventor: LIU, Xiaofei, Beijing 100085 (CN); JIANG, Xiaowei, Beijing 100085 (CN)
(74) Representative: Stöckeler, Ferdinand
(86) International application number: PCT/CN2022/076110
(87) International publication number: WO 2023/151049

(57) **Abstract**

The present invention relates to a relationship indication method and device, an information transmission method and device, a communication device, and a storage medium. The relationship indication method includes: receiving an indication of a non-access stratum (NAS) by means of an access stratum (AS), so as to determine a slice group-slice mapping relationship corresponding to a region where a terminal is located and/or an adjacent region of the region. According to the present invention, the NAS in the terminal can send the slice group-slice mapping relationship corresponding to the region where the terminal is located and/or the adjacent region of the region to the AS, so that the AS can accurately determine a slice group corresponding to a slice according to the mapping relationship when needing to operate according to the slice group corresponding to the slice.

## Description

### FIELD

The present invention relates to the field of communication technologies, and particularly to a method for indicating a relationship, a method for transmitting information, a device for indicating a relationship, a device for transmitting information, a communication device and a computer readable storage medium.

### BACKGROUND

Network slice (slice for short) can provide a complete end-to-end virtual network for a specific user. By dividing network resources into multiple network slices, 5G network slices can provide differentiated services for users with different service requirements in latency, reliability, capacity, isolation, and other functions. Accordingly, the operator network not only provides information consumption business characterized by "best effort transmission" as the communication demand, but also provides production control services with "deterministic transmission" as the communication demand. Logically or physically isolated network resources are allocated to services with disparate communication requirements.

On the basis of slices, a slice group is further proposed, and one or more slices can be mapped to a slice group. At present, slice groups are configured separately for tracking areas (TAs). Mapping relationships between the slice group and slices for different TAs may be different. There may be some problems when a terminal at an edge of adj acent TAs performs operations.

### SUMMARY

In view of this, embodiments of the present invention provide a method for indicating a relationship, a method for transmitting information, an apparatus for indicating a relationship, an apparatus for transmitting information, a communication device and a computer readable storage medium to solve technical problems in related technologies.

According to a first aspect of embodiments of the present invention, there is provided a method for indicating a relationship, performed by a terminal, including: determining a mapping relationship between a slice group and a slice corresponding to an area where the terminal is located and/or an adjacent area of the area by receiving, through an access stratum (AS), an indication from a non-access stratum (NAS).

According to a second aspect of embodiments of the present invention, there is provided a method for transmitting information, performed by a network device, including: sending information to the terminal as described above, and/or receiving information sent by the terminal as described above.

According to a third aspect of embodiments of the present invention, there is provided an apparatus for indicating a relationship, applicable to a terminal, including: a processing module configured to determine a mapping relationship between a slice group and a slice corresponding to an area where the terminal is located and/or an adjacent area of the area by receiving, through an access stratum (AS), an indication from a non-access stratum (NAS).

According to a fourth aspect of embodiments of the present invention, there is provided an apparatus for transmitting information, applicable to a network device, including: a communicating module configured to send information to the terminal as described above, and/or receive information sent by the terminal as described above.

According to a fifth aspect of embodiments of the present invention, there is provided a communication device, including: a processor; and a memory for storing a computer program, when executed by the processor, causes the method for indicating the relationship as described above to be implemented.

According to a sixth aspect of embodiments of the present invention, there is provided a communication device, including: a processor; and a memory for storing a computer program, when executed by the processor, causes the method for transmitting the information as described above to be implemented.

According to a seventh aspect of embodiments of the present invention, there is provided a computer readable storage medium having stored therein a computer program that, when executed by a processor, causes the method for indicating the relationship as described above to be implemented.

According to an eighth aspect of embodiments of the present invention, there is provided a computer readable storage medium having stored therein a computer program that, when executed by a processor, causes the method for transmitting the information as described above to be implemented.

According to the embodiments of the present invention, the NAS in the terminal can send the mapping relationship between the slice group and the slice corresponding to the area where the terminal is located and/or the adjacent area of the area to the AS, so that the AS can accurately determine the slice group corresponding to the slice according to the mapping relationship between the slice group and the slice when the AS needs to perform operation(s) according to the slice group corresponding to the slice.

### BRIEF DESCRIPTION OF THE DRAWINGS

In order to clearly illustrate technical solutions of embodiments of the present invention, a brief description of drawings for the embodiments is given below. The drawings in the following description only show a part of the embodiments of the present invention, and those skilled in the art may obtain other drawings according to these drawings without creative work.
FIG. 1 is a schematic flow chart illustrating a method for indicating a relationship according to embodiments of the present invention.
FIG. 2 is a schematic flow chart illustrating another method for indicating a relationship according to embodiments of the present invention.
FIG. 3 is a schematic flow chart illustrating yet another method for indicating a relationship according to embodiments of the present invention.
FIG. 4 is a schematic flow chart illustrating a further method for indicating a relationship according to embodiments of the present invention.
FIG. 5 is a schematic flow chart illustrating a further method for indicating a relationship according to embodiments of the present invention.
FIG. 6 is a schematic flow chart illustrating a method for transmitting information according to embodiments of the present invention.
FIG. 7 is a schematic block diagram illustrating an apparatus for indicating a relationship according to embodiments of the present invention.
FIG. 8 is a schematic block diagram illustrating an apparatus for transmitting information according to embodiments of the present invention.
FIG. 9 is a schematic block diagram illustrating a device for transmitting information according to embodiments of the present invention.
FIG. 10 is a schematic block diagram illustrating a device for indicating a relationship according to embodiments of the present invention.

### DETAILED DESCRIPTION

Reference will be made to clearly and completely describe technical solutions of the embodiments of the present invention with the accompanying drawings. The embodiments described herein are only a part of the embodiments of the present invention and are not all embodiments of the present invention. Based on the embodiments of the present invention, those skilled in the art may obtain other embodiments without creative work, and these embodiments shall be considered within the scope of the present invention.

Terms used in the embodiments of the present invention are only for the purpose of describing specific embodiments, and shall not be construed to limit the present invention. As used in the embodiments of the present invention and the appended claims, "a/an" and "the" in a singular form are intended to include plural forms, unless clearly indicated in the context otherwise. It should be understood that, the term "and/or" used herein represents and contains any one of associated listed items and all possible combinations of more than one associated listed items.

It should be understood that terms such as "first," "second" and "third" may be used in the embodiments of the present invention for describing various information, these information should not be limited by these terms. These terms are only used for distinguishing information of the same type from others. For example, first information may also be referred to as second information, and similarly, the second information may also be referred to as the first information, without departing from the scope of the embodiments of the present invention. As used herein, the term "if' may be construed to mean "when" or "upon" or "in response to determining" depending on the context.

For purposes of conciseness and ease of understanding, terms "greater than" or "less than", "higher than" or "lower than" are used herein in characterizing size relationships. It may be understood for a person skilled in the art that the term "greater than" covers a meaning of "greater than or equal to", and the term "less than" covers a meaning of "less than or equal to"; the term "higher than" covers a meaning of "higher than or equal to", and the term "lower than" covers a meaning of "lower than or equal to".

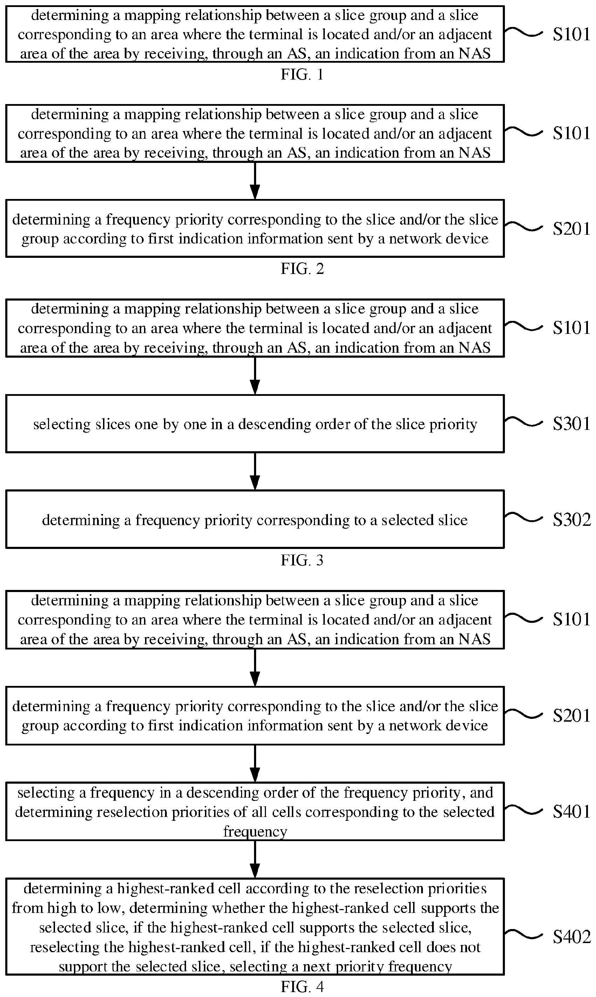

FIG. 1 is a schematic flow chart illustrating a method for indicating a relationship according to embodiments of the present invention. The method for indicating the relationship shown in the embodiments may be performed by a terminal. The terminal includes, but is not limited to, a communication device such as a mobile phone, a tablet computer, a wearable device, a sensor, and an Internet of Things device. The terminal may be communicated with a network device. The network device includes, but is not limited to, a network device in a 4G, 5G, 6G communication systems, such as a base station, and a core network.

As shown in FIG. 1, the method for indicating the relationship may include the following step.

In S101, a mapping relationship between a slice group and a slice corresponding to an area where the terminal is located and/or an adjacent area of the area is determined by receiving, through an access stratum (AS), an indication from a non-access stratum (NAS).

In an embodiment, the slice group is configured for each area, and the area includes, but not limited to, a tracking area (TA) and a cell. In the following embodiments, the area is the TA for example.

Slice groups may be configured separately for TAs, that is, the slice group is configured per TA. In this case, the mapping relationship between slice group and the slice(s) is also configured separately for each TA. Therefore, different TAs may correspond to different mapping relationships. In this case, there will be some problems when the terminal between adjacent TAs performs an operation (including but not limited to cell reselection and random access).

For example, for two adjacent tracking areas TA1 and TA2, in mapping relationship 1 corresponding to TA1, slice 1 is mapped to slice group 1, and in mapping relationship 2 corresponding to TA2, slice 1 is mapped to slice group 2.

When the terminal is at a boundary of TA1 and TA2 to perform cell reselection, the terminal may determine a desired slice, such as slice 1, and determine a cell supporting slice 1 for the cell reselection.

The network device may indicate a frequency priority corresponding to slice information, slice information supported by the cell for the terminal via broadcast or unicast. For example, the network device indicates the slice information supported by the cell to the terminal. If the indication is the slice group supported by the cell, after the terminal selects a cell (such as a suitable cell or other cells), for example the selected cell is determined to be cell 1, it needs to determine a slice group corresponding to slice 1 in order to determine whether cell 1 supports slice 1 according to the slice group supported by the cell indicated by the network device.

The mapping relationship corresponding to TA is stored in the NAS, and related operations of the cell reselection are performed by the AS. In order to determine the slice group corresponding to slice 1, the AS in the terminal may send an identifier such as single-network slice selection assistance information (S-NSSAI) of slice 1 to the NAS, and the NAS determines the slice group corresponding to slice 1 according to the mapping relationship, for example, determines a slice group ID of the slice group corresponding to slice 1, and sends the identifier of the slice group to the AS. During this process, the mapping relationship corresponding to TA stored in the NAS is "transparent" to the AS, that is, the AS does not know the mapping relationship corresponding to TA, and can only receive the slice group ID sent by the NAS, and determine the slice group corresponding to slice 1 according to the slice group ID.

The problem in this process is that if the terminal is located in TA1, but cell 1 is located in TA2, since the NAS does not know that the terminal needs to determine whether cell 1 supports slice 1, then when determining the slice group corresponding to slice 1, it may determine the slice group corresponding to slice 1 according to mapping relationship 1 corresponding to TA1. However, since cell 1 is located in TA2, the slice group corresponding to slice 1 should be determined according to mapping relationship 2 corresponding to TA2, and mapping relationship 2 corresponding to TA2 may be different from mapping relationship 1 corresponding to TA1. Therefore, determining the slice group corresponding to slice 1 according to mapping relationship 1 corresponding to TA1 may result in wrongly determined slice group, and thus whether cell 1 supports slice 1 may be inaccurately determined.

According to the embodiments of the present invention, the NAS in the terminal can send the mapping relationship between the slice group and the slice corresponding to the area where the terminal is located and/or the adjacent area of the area to the AS, so that the AS can accurately determine the slice group corresponding to the slice according to the mapping relationship between the slice group and the slice when the AS needs to perform operation(s) according to the slice group corresponding to the slice.

Still taking the above scenario as an example, according to the embodiments of the present invention, the NAS sends for example mapping relationship 1 between the slice group and the slice corresponding to TA1 where the terminal is located, and mapping relationship 2 between the slice group and the slice corresponding to TA2 adjacent to TA1 to the AS. Since the AS needs to determine whether cell 1 supports slice 1 when determining the slice group corresponding to slice 1, and it is determined that cell 1 is located in TA2, the slice group corresponding to slice 1 may be determined according to mapping relationship 2 corresponding to TA2, so as to accurately determine the slice group corresponding to slice 1, and accurately determine whether cell 1 supports slice 1 according to the slice group supported by the cell (one or more non-specific cells) indicated by the network.

In an embodiment, receiving, through the AS, the indication from the NAS includes: receiving, through the AS, slice-related information sent by the NAS. The slice-related information includes at least one of: the slice; a slice priority; the mapping relationship; a corresponding relationship between an effective area of the mapping relationship and the mapping relationship.

In an embodiment, the NAS may send the slice-related information to the AS, and the mapping relationship between the slice group and the slice may be included in the slice-related information.

In the slice-related information, in addition to the mapping relationship, it may further include the corresponding relationship between the effective area of the mapping relationship and the mapping relationship. For example, one mapping relationship may correspond to one or more effective areas. A form of the corresponding relationship includes, but is not limited to, a list, for example, an effective area corresponding to mapping relationship 1 is TA1, and an effective area corresponding to mapping relationship 2 is TA2. It should be noted that the effective area includes, but not limited to, a cell and a TA.

Further, the slice-related information may include a slice, such as a slice that the terminal expects to use. For example, when the terminal needs to perform a service, it may expect to use the slice corresponding to the service. The slice-related information may further include a slice priority of a slice (such as the slice that is expected to be used). For example, the slice that the terminal expects to use includes multiple slices, and a priority relationship of the multiple slices may be determined according to slice priorities of the slices. In subsequent slice-related operations, such as performing the cell reselection based on the slice, the multiple slices may be considered one by one according to the slice priority.

In an embodiment, the method further includes: performing the cell reselection according to the slice-related information. The terminal may perform the cell reselection according to the slice-related information. For example, during the cell reselection, the slice group corresponding to the slice may be determined according to the mapping relationship in the slice-related information.

FIG. 2 is a schematic flow chart illustrating another method for indicating a relationship according to embodiments of the present invention. As shown in FIG. 2, the method further includes the following step.

In S201, a frequency priority corresponding to the slice and/or the slice group is determined according to first indication information sent by a network device.

In an embodiment, the network device may indicate the frequency priority corresponding to the slice and/or indicate the frequency priority corresponding to the slice group to the terminal through the first indication information. The frequency priority may be used by the terminal to perform the cell reselection. For example, when performing the cell reselection, the terminal may consider frequencies one by one according to the frequency priority from high to low (i.e., in a descending order of the frequency priority).

The slice and/or the slice group corresponding to the frequency priority include a slice and/or a slice group supported by a current serving frequency for the terminal, and may include a slice and/or a slice group supported by an adjacent frequency of the current serving frequency.

In an embodiment, the first indication information is carried in at least one of: a system information block (SIB); a radio resource control (RRC) release message.

In an embodiment, information related to the slice information carried by the SIB may include information related to the slice group; information related to the slice information carried in the RRC release message may include information related to the slice group (for example, information related to an identifier of the slice group is indicated), may also include information related to an individual slice (for example, information related to an identifier S-NSSAI of a single slice is indicated, and single slice-related is referred as slice-related in the following description).

The information related to the slice information includes, but not limited to, the frequency priority corresponding to the slice information and the slice information supported by the cell.

For example, when the information related to the slice information includes the frequency priority corresponding to the slice information, the first indication information carried in the SIB may indicate the frequency priority corresponding to the slice group; the first indication information carried in the RRC release message may indicate the frequency priority corresponding to the slice group and/or indicate the frequency priority corresponding to the slice.

For example, when the information related to the slice information includes the slice information supported by the cell, second indication information carried in the SIB may indicate the slice group supported by the cell; second indication information carried in the RRC release message may indicate the slice group supported by the cell and/or indicates the slice supported by the cell.

In the following embodiments, the first indication information is exemplarily described first, and then the second indication information is exemplarily described.

In an embodiment, when the first indication information is carried in the SIB, the first indication information is used to indicate the frequency priority corresponding to the slice group; when the first indication information is carried in the RRC release message, the first indication information is used to indicate the frequency priority corresponding to the slice and/or indicate the frequency priority corresponding to the slice group.

Since the SIB is generally a message broadcast by the network device, it may not be received by a specific terminal, so that there may be security issues to a certain extent. Therefore, when the first indication information is carried in the SIB, the frequency priority corresponding to the specific slice is not indicated, but the frequency priority corresponding to the slice group is indicated.

The RRC release is a unicast message, which will only be received by the specific terminal, so generally there will be no security issues like those for the SIB message. Therefore, when the first indication information is carried in the RRC release, the frequency priority corresponding to the specific slice is indicated and it is also possible to indicate the frequency priority corresponding to the slice group, which may be set as required.

FIG. 3 is a schematic flow chart illustrating yet another method for indicating a relationship according to embodiments of the present invention. As shown in FIG. 3, performing the cell reselection according to the slice-related information includes the following steps.

In S301, slices are selected one by one in a descending order of the slice priority.

In S302, a frequency priority corresponding to a selected slice is determined.

In an embodiment, when performing the cell reselection according to the slice-related information, the terminal may select slices one by one according to the slice priority from high to low, and determine the frequency priority corresponding to the selected slice.

In an embodiment, the method further includes: selecting a frequency in a descending order of the frequency priority, and determining ranking of all cells corresponding to the selected frequency; selecting a cell according to the ranking, and determining whether a selected cell supports the selected slice; reselecting the selected cell in response to at least satisfying that the selected cell supports the selected slice; selecting a next cell in the ranking until it is determined that the selected cell supports the selected slice or traversing all cells corresponding to the selected frequency and selecting a frequency having a next priority in response to the selected cell not supporting the selected slice.

In an embodiment, after the frequency priority is determined, the cell reselection may be performed, and before performing the cell reselection, it needs to determine whether the cell supports the selected slice.

First, the frequency may be selected according to the frequency priority from high to low, and the ranking of all cells corresponding to the selected frequency may be determined. For example, the ranking may be determined according to R criterion. The cell is selected according to the ranking, and whether the selected cell supports the selected slice is determined.

In response to at least satisfying that the selected cell supports the selected slice, the selected cell is reselected (i.e., is a target for the reselection). That is, a condition for reselecting the selected cell at least includes that the selected cell supports the selected slice, and may further include that the selected cell satisfies a determination condition of a suitable cell.

In response to the selected cell not supporting the selected slice, a next cell according to the ranking is selected until it is determined that the selected cell supports the selected slice, or all cells corresponding to the selected frequency are traversed, the next priority frequency is selected, and the above steps in the embodiment are performed.

In an embodiment, the method further includes: selecting a frequency in a descending order of the frequency priority, and determining ranking of all cells corresponding to the selected frequency; selecting a highest-ranked cell according to the ranking, and determining whether a selected cell supports the selected slice; reselecting the highest-ranked cell in response to at least satisfying that the highest-ranked cell supports the selected slice; selecting a next priority frequency in response to the highest-ranked cell not supporting the selected slice.

In an embodiment, after the frequency priority is determined, the cell reselection may be performed, and before performing the cell reselection, it needs to determine whether the cell supports the selected slice.

First, the frequency may be selected according to the frequency priority from high to low, and the ranking of all cells corresponding to the selected frequency may be determined. For example, the ranking may be determined according to R criterion. The highest-ranked cell is selected according to the ranking, and whether the selected cell supports the selected slice is determined.

In response to at least satisfying that the selected cell (i.e., the highest-ranked cell) supports the selected slice, the selected cell is reselected. That is, a condition for reselecting the selected cell at least includes that the selected cell supports the selected slice, and may further include that the selected cell satisfies a determination condition of a suitable cell.

In response to the selected cell not supporting the selected slice, a next priority frequency may be selected, and the above steps in the embodiment are performed.

In an embodiment, the reselection process may mainly include the following steps.

In step A, a slice is selected in a descending order of the slice priority, and a frequency priority corresponding to the selected slice is determined.

In step B, a frequency is selected in a descending order of the frequency priority, and ranking of all cells corresponding to the selected frequency is determined (for example, according to R criterion). For example, the frequency priority corresponding to the selected slice is that frequency f1 is higher than frequency f2, step B and step C may be performed for f1 first, and if it is determined that no cell supports the selected slice, step B and step C may be performed for f2.

In step C: a cell is selected according to the ranking, and whether a selected cell supports the selected slice is determined.

If the selected cell does not support the selected slice, step D is performed, that is, a cell with the next priority is selected and it is determined whether it supports the selected slice. The selection is performed until a cell supporting the selected slice is determined, or all cells corresponding to the ranking are traversed, and step B, step C and step D are performed in cycle until a cell supporting the selected slice is determined or all frequencies corresponding to the selected slice are traversed.

Alternatively, when selecting the cell with the highest ranking, if the selected cell does not support the selected slice, steps B and C may be performed in cycle until the cell that supports the selected slice is determined or all frequencies corresponding to the selected slice are traversed.

After traversing all the frequency priorities corresponding to the frequency priority corresponding to the selected slice, if the cell supporting the selected slice is still not determined, step A and subsequent steps (for example, step B and step C, or step B, step C and step D) are performed in cycle until the cell supporting the selected slice is determined or all slices corresponding to the slice priority are traversed.

After traversing all the slices corresponding to the slice priority, if the cell supporting the selected slice is still not determined, the cell reselection may be performed in the legacy way, for example, according to a legacy frequency priority indicated by the network side (not the frequency priority corresponding to the slice information).

The first indication information may be carried in the SIB or in the RRC release message, and the first indication information carried in the SIB and the first indication information carried in the RRC release message may be the same or different. Therefore, when the first indication information is carried in both the SIB and the RRC release message, override between the first indication information in the SIB and the first indication information in the RRC release message needs to be considered.

In an embodiment, in response to the first indication information being only carried in the SIB, determining the frequency priority corresponding to the selected slice includes: determining, according to the corresponding relationship, a current mapping relationship corresponding to a current area where the terminal is located; determining a target slice group corresponding to the selected slice according to the current mapping relationship; determining a frequency priority corresponding to the target slice group according to the first indication information; determining the frequency priority corresponding to the selected slice according to the frequency priority corresponding to the target slice group.

In an embodiment, when the first indication information is only carried in the SIB, because the first indication information is used to indicate the frequency priority corresponding to the slice group when the first indication information is carried in the SIB, it needs to determine the slice group corresponding to the slice before determining the frequency priority corresponding to the slice.

For example, the current area where the terminal is located may be determined first, and then the current mapping relationship corresponding to the current area is determined according to the corresponding relationship in the slice-related information, and the target slice group corresponding to the selected slice is determined according to the current mapping relationship. On the other hand, the frequency priority corresponding to the target slice group may be determined according to the first indication information, and the frequency priority corresponding to the selected slice may be determined according to the frequency priority corresponding to the target slice group.

In an embodiment, in response to the first indication information being carried in the SIB and the RRC release message, where the first indication information in the RRC release message is used to indicate the frequency priority corresponding to the slice group, determining the frequency priority corresponding to the selected slice includes: determining, according to the corresponding relationship, a current mapping relationship corresponding to a current area where the terminal is located; determining a target slice group corresponding to the selected slice according to the current mapping relationship; determining a frequency priority corresponding to the target slice group according to the first indication information in the RRC release message, or determining a frequency priority corresponding to the target slice group according to the first indication information in the RRC release message and determining the frequency priority corresponding to the target slice group according to the first indication information in the SIB if the frequency priority corresponding to the selected slice cannot be determined.

In an embodiment, when the first indication information is carried in both the SIB and the RRC release message, override between the first indication information in the SIB and the first indication information in the RRC release message needs to be considered, that is, it needs to determine whether the frequency priority corresponding to the selected slice is determined according to the first indication information in the SIB or the first indication information in the RRC release message.

In an embodiment, the first indication information in the RRC release message may override the first indication information carried in the SIB. The first indication information carried in the SIB may be ignored, and when the first indication information in the RRC release message is used to indicate the frequency priority corresponding to the slice group, the current mapping relationship corresponding to the current area is determined according to the corresponding relationship in the slice-related information, the target slice group corresponding to the selected slice is determined according to the current mapping relationship, and the frequency priority corresponding to the target slice group is determined according to the first indication information in the RRC release message.

In an embodiment, the first indication information in the RRC release message and the first indication information carried in the SIB may be considered comprehensively. For example, the current mapping relationship corresponding to the current area is determined according to the corresponding relationship in the slice-related information, the target slice group corresponding to the selected slice is determined according to the current mapping relationship, and the frequency priority corresponding to the target slice group is determined according to the first indication information in the RRC release message. If the frequency priority corresponding to the selected slice cannot be determined, the frequency priority corresponding to the target slice group is determined according to the first indication information in the SIB. Accordingly, it is beneficial to ensure that the frequency priority corresponding to the selected slice is determined.

In an embodiment, in response to the first indication information being carried in the SIB and the RRC release message, where the first indication information in the RRC release message is used to indicate the frequency priority corresponding to the slice, determining the frequency priority corresponding to the selected slice includes: determining the frequency priority corresponding to the selected slice according to the first indication information in the RRC release message; or determining the frequency priority corresponding to the selected slice according to the first indication information in the RRC release message and if the frequency priority corresponding to the selected slice cannot be determined, determining, according to the corresponding relationship, the current mapping relationship corresponding to the current area where the terminal is located, determining the target slice group corresponding to the selected slice according to the current mapping relationship, and determining the frequency priority corresponding to the target slice group according to the first indication information in the SIB.

In an embodiment, when the first indication information is carried in both the SIB and the RRC release message, override between the first indication information in the SIB and the first indication information in the RRC release message needs to be considered, that is, it needs to determine whether the frequency priority corresponding to the selected slice is determined according to the first indication information in the SIB or the first indication information in the RRC release message.

In an embodiment, the first indication information in the RRC release message may override the first indication information carried in the SIB. The first indication information carried in the SIB may be ignored, and when the first indication information in the RRC release message is used to indicate the frequency priority corresponding to the slice, the frequency priority corresponding to the selected slice may be determined directly according to the first indication information in the RRC release message.

In an embodiment, the first indication information in the RRC release message and the first indication information carried in the SIB may be considered comprehensively. For example, the frequency priority corresponding to the selected slice is determined according to the first indication information in the RRC release message. If the frequency priority corresponding to the selected slice cannot be determined, the current mapping relationship corresponding to the current area is determined according to the corresponding relationship in the slice-related information, the target slice group corresponding to the selected slice is determined according to the current mapping relationship, and the frequency priority corresponding to the target slice group is determined according to the first indication information in the SIB. Accordingly, it is beneficial to ensure that the frequency priority corresponding to the selected slice is determined.

In an embodiment, in response to the first indication information being carried in the SIB and the RRC release message, where the first indication information in the RRC release message is used to indicate the frequency priority corresponding to the slice and the frequency priority corresponding to the slice group, determining the frequency priority corresponding to the selected slice includes: determining the frequency priority corresponding to the selected slice according to the frequency priority corresponding to the slice in the first indication information in the RRC release message only; or determining, according to the corresponding relationship, the current mapping relationship corresponding to the current area where the terminal is located, determining the target slice group corresponding to the selected slice according to the current mapping relationship, and determining the frequency priority corresponding to the target slice group according to the frequency priority corresponding to the slice group in the first indication information in the RRC release message only; or determining the frequency priority corresponding to the selected slice according to the frequency priority corresponding to the slice in the first indication information in the RRC release message, if the frequency priority corresponding to the selected slice cannot be determined, determining, according to the corresponding relationship, the current mapping relationship corresponding to the current area where the terminal is located, determining the target slice group corresponding to the selected slice according to the current mapping relationship, and determining the frequency priority corresponding to the target slice group according to the first indication information in the SIB; or determine, according to the corresponding relationship, the current mapping relationship corresponding to the current area where the terminal is located, determining the target slice group corresponding to the selected slice according to the current mapping relationship, determining the frequency priority corresponding to the target slice group according to the frequency priority corresponding to the slice group in the first indication information in the RRC release message, and if the frequency priority corresponding to the selected slice cannot be determined, determining the frequency priority corresponding to the target slice group according to the first indication information in the SIB.

In an embodiment, when the first indication information is carried in both the SIB and the RRC release message, override between the first indication information in the SIB and the first indication information in the RRC release message needs to be considered, that is, it needs to determine whether the frequency priority corresponding to the selected slice is determined according to the first indication information in the SIB or the first indication information in the RRC release message.

In an embodiment, the first indication information in the RRC release message may override the first indication information carried in the SIB, and the first indication information carried in the SIB may be ignored.

For example, when the first indication information in the RRC release message is used to indicate the frequency priority corresponding to the slice, the frequency priority corresponding to the selected slice may be directly determined according to the first indication information in the RRC release message.

For example, when the first indication information in the RRC release message is used to indicate the frequency priority corresponding to the slice group, the current mapping relationship corresponding to the current area is determined according to the corresponding relationship in the slice-related information, the target slice group corresponding to the selected slice is determined according to the current mapping relationship, and the frequency priority corresponding to the target slice group is determined according to the frequency priority corresponding to the slice group in the first indication information in the RRC release message.

In an embodiment, the first indication information in the RRC release message and the first indication information carried in the SIB may be considered comprehensively.

For example, when the first indication information in the RRC release message is used to indicate the frequency priority corresponding to the slice, the frequency priority corresponding to the selected slice may be determined according to the first indication information in the RRC release message. If the frequency priority corresponding to the selected slice cannot be determined, the current mapping relationship corresponding to the current area is determined according to the corresponding relationship in the slice-related information, the target slice group corresponding to the selected slice is determined according to the current mapping relationship, and the frequency priority corresponding to the target slice group is determined according to the first indication information in the SIB.

For example, when the first indication information in the RRC release message is used to indicate the frequency priority corresponding to the slice group, the current mapping relationship corresponding to the current area is determined according to the corresponding relationship in the slice-related information, the target slice group corresponding to the selected slice is determined according to the current mapping relationship, the frequency priority corresponding to the target slice group is determined according to the first indication information in the RRC release message, and if the frequency priority corresponding to the selected slice cannot be determined, the frequency priority corresponding to the target slice group is determined according to the first indication information in the SIB.

It should be noted that, in the above embodiments of the first indication information and the subsequent embodiments of the second indication information, when the indication information is carried in the SIB and the RRC release message and the override is considered, it generally describes that the indication information in the RRC release message overrides the indication information in the SIB, but in fact it is adjustable according to the needs, and it is also possible to set the indication information in the SIB to override the indication information in the RRC release message.

FIG. 4 is a schematic flow chart illustrating a further method for indicating a relationship according to embodiments of the present invention. As shown in FIG. 4, the method further includes the following steps.

In S401, a frequency is selected in a descending order of the frequency priority, and ranking of all cells corresponding to the selected frequency is determined.

In S402, a highest-ranked cell is determined according to the ranking from high to low, it is determined whether the highest-ranked cell supports the selected slice. If the highest-ranked cell supports the selected slice, the highest-ranked cell is reselected. If the highest-ranked cell does not support the selected slice, a next priority frequency is selected.

In an embodiment, after determining the frequency priority corresponding to the selected slice, the frequency may be selected in the descending order of the frequency priority, and the ranking of all cells corresponding to the selected frequency may be determined (for example, according to R criterion).

The ranking may be determined according to R criterion. For example, a factor to be considered at least includes a signal quality of the cell, and the higher the signal quality, the higher the ranking.

Furthermore, the cell may be selected from according to the ranking from high to low, and it is determined whether the selected cell supports the selected slice. If the selected cell supports the selected slice, the selected cell is reselected. For example, if the selected cell is the highest-ranked cell, this cell is reselected; if the selected cell does not support the selected slice, the next priority frequency is selected. That is, for the next priority frequency, it is determined whether the highest-ranked cell among all the corresponding cells supports the selected slice. Accordingly, it is beneficial to ensure that the reselected cell is the most suitable cell corresponding to the selected frequency, thus ensuring good communication quality after the cell is reselected.

It should be noted that, when the selected cell does not support the selected slice, another implementation of this embodiment may be to select the next priority cell, and determine whether the selected cell supports the selected slice, and so on, until a cell supporting the selected slice is determined, or all cells corresponding to the selected frequency are traversed and then the next priority frequency is selected. Accordingly, all the cells corresponding to the frequency may be considered completely.

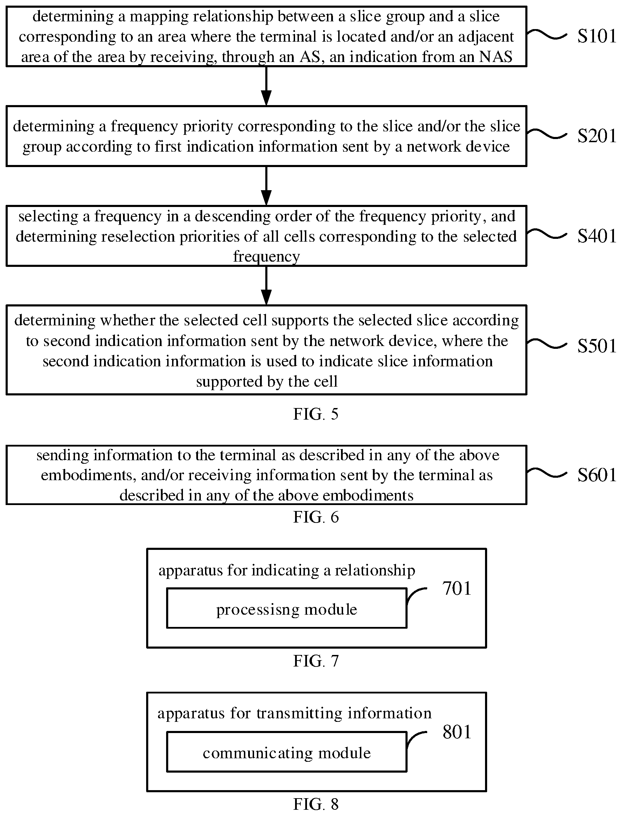

FIG. 5 is a schematic flow chart illustrating a further method for indicating a relationship according to embodiments of the present invention. As shown in FIG. 5, determining whether the selected cell supports the selected slice includes the following step.

In block 501, it is determined whether the selected cell supports the selected slice according to second indication information sent by the network device, where the second indication information is used to indicate slice information supported by the cell.

In an embodiment, the network device may indicate the slice information supported by the cell to the terminal through the second indication information, one or more cells may be indicated by the second indication information, and the indicated cell may include a non-specific cell and a specific cell. After selecting a cell, the terminal may determine whether the selected cell supports the selected slice according to the second indication information.

In an embodiment, the second indication information is carried in at least one of: a system information block (SIB); a radio resource control (RRC) release message.

In an embodiment, when the second indication information is carried in the SIB, the second indication information is used to indicate the slice group supported by the cell. When the second indication information is carried in the RRC release message, the second indication information is used to indicate the slice and/or the slice group supported by the cell.

In an embodiment, information related to the slice information carried by the SIB may include information related to the slice group; information related to the slice information carried in the RRC release message may include information related to the slice group, may also include information related to an individual slice.

The information related to the slice information includes, but not limited to, the frequency priority corresponding to the slice information and the slice information supported by the cell.

For example, when the information related to the slice information includes the frequency priority corresponding to the slice information, the first indication information carried in the SIB may indicate the frequency priority corresponding to the slice group; the first indication information carried in the RRC release message may indicate the frequency priority corresponding to the slice group and/or indicate the frequency priority corresponding to the slice.

For example, when the information related to the slice information includes the slice information supported by the cell, second indication information carried in the SIB may indicate the slice group supported by the cell; second indication information carried in the RRC release message may indicate the slice group supported by the cell and/or indicates the slice supported by the cell.

In an embodiment, when the second indication information is carried in the SIB, the second indication information is used to indicate the slice group supported by the cell; when the first indication information is carried in the RRC release message, the first indication information is used to indicate the slice and/or the slice group supported by the cell.

Since the SIB is generally a message broadcast by the network device, it may not be received by a specific terminal, so that there may be security issues to a certain extent. Therefore, when the second indication information is carried in the SIB, the slice supported by the specific cell is not indicated, but the slice group supported by the cell is indicated.

The RRC release is a unicast message, which will only be received by the specific terminal, so generally there will be no security issues like those for the SIB message. Therefore, when the second indication information is carried in the RRC release, the specific slice supported by the cell is indicated and it is also possible to indicate the slice group supported by the cell, which may be set as required.

In an embodiment, in response to the second indication information being only carried in the SIB, determining whether the selected cell supports the selected slice further includes: determining a slice group supported by the selected cell according to the slice group supported by the cell indicated by the second indication information; determining, according to area information sent by the network device, a target area to which the selected cell belongs; determining a target mapping relationship corresponding to the target area according to the corresponding relationship; determining the slice supported by the selected cell according to the slice group supported by the selected cell based on the mapping relationship.

In an embodiment, when the second indication information is only carried in the SIB, because the second indication information is used to indicate the slice group supported by the cell when the second indication information is carried in the SIB, it needs to determine the slice group corresponding to the slice before determining the slice supported by the cell.

For example, the target area to which the selected cell belongs may be determined, the target mapping relationship corresponding to the target area may be determined according to the corresponding relationship in the slice-related information, and the slice supported by the selected cell may be determined according to the slice group supported by the selected cell based on the target mapping relationship.

The slice supported by the selected cell is determined according to the slice group supported by the selected cell based on the target mapping relationship in two ways.

A target slice group corresponding to the selected slice is determined according to the target mapping relationship, and the slice group supported by the cell is determined according to the target mapping relationship. Then, it is determined whether the target slice group is the same as the slice group supported by the cell. If they are the same, it can be determined that the cell supports the selected slice. If they are different, it can be determined that the cell does not support the selected slice (the same slice will not be mapped to different groups).

A target slice corresponding to the slice group supported by the cell is determined according to the target mapping relationship, and it is determined whether the selected slice is included in the target slice. If it is included in the target slice, it can be determined that the cell supports the selected slice. If it is not included in the target slice, it can be determined that the cell does not support the selected slice (the same slice will not be mapped to different groups).

It should be noted that the area information sent by the network device may include information of a TA (including a current TA and a neighbor TA of the current TA), such as a TA identifier, i.e., TAC, and it is also possible to include information of a cell (including a current cell and a neighbor cell of the current cell), such as cell ID. After determining the selected cell, the terminal may determine the area information corresponding to the selected cell, and then determine, according to the area information corresponding to the selected cell, the target area to which the selected cell belongs. For example, if it is determined that the area information corresponding to the selected cell is an identifier of TA1, it can be determined that the selected cell belongs to TA1.

In an embodiment, in response to the second indication information being carried in the SIB and the RRC release message, where the second indication information in the RRC release message is used to indicate the slice group supported by the cell, determining whether the selected cell supports the selected slice further includes: determining the slice group supported by the selected cell according to the second indication information in the RRC release message, determining, according to the area information sent by the network device, the target area to which the selected cell belongs, determining the target mapping relationship corresponding to the target area according to the corresponding relationship, and determining the slice supported by the selected cell according to the mapping relationship and the slice group supported by the selected cell; or determining the slice group supported by the selected cell according to the second indication information in the RRC release message, if the slice group supported by the selected cell cannot be determined, determining the slice group supported by the selected cell according to the second indication information in the SIB, determining, according to the area information sent by the network device, the target area to which the selected cell belongs, determining the target mapping relationship corresponding to the target area according to the corresponding relationship, and determining the slice supported by the selected cell according to the mapping relationship and the slice group supported by the selected cell.

In an embodiment, when the second indication information is carried in both the SIB and the RRC release message, override between the second indication information in the SIB and the second indication information in the RRC release message needs to be considered, that is, it needs to determine whether the slice supported by the cell is determined according to the second indication information in the SIB or the second indication information in the RRC release message.

In an embodiment, the second indication information in the RRC release message may override the second indication information carried in the SIB. The second indication information carried in the SIB may be ignored, and when the second indication information in the RRC release message is used to indicate the slice group supported by the cell, the slice group supported by the selected cell is determined according to the second indication information in the RRC release message, the target area to which the selected cell belongs is determined according to the area information sent by the network device, the target mapping relationship corresponding to the target area is determined according to the corresponding relationship in the slice-related information, and the slice supported by the selected cell is determined according to the mapping relationship and the slice group supported by the selected cell.

In an embodiment, the second indication information in the RRC release message and the second indication information carried in the SIB may be considered comprehensively. For example, the slice group supported by the selected cell is determined according to the second indication information in the RRC release message, if the slice group supported by the selected cell cannot be determined, the slice group supported by the selected cell is determined according to the second indication information in the SIB. Then, the target area to which the selected cell belongs is determined according to the area information sent by the network device, the target mapping relationship corresponding to the target area is determined according to the corresponding relationship, and the slice supported by the selected cell is determined according to the mapping relationship and the slice group supported by the selected cell. Accordingly, it is beneficial to ensure that the slice group supported by the selected cell is determined.

In an embodiment, in response to the second indication information being carried in the SIB and the RRC release message, where the second indication information in the RRC release message is used to indicate the slice supported by the cell, determining whether the selected cell supports the selected slice further includes: determining the slice supported by the selected cell according to the second indication information in the RRC release message; or determining the slice supported by the selected cell according to the second indication information in the RRC release message, if the slice supported by the selected cell cannot be determined, determining the slice group supported by the selected slice according to the second indication information in the SIB, determining, according to the area information sent by the network device, the target area to which the selected cell belongs, determining the target mapping relationship corresponding to the target area according to the corresponding relationship, and determining the slice supported by the selected cell according to the mapping relationship and the slice group supported by the selected cell.

In an embodiment, when the second indication information is carried in both the SIB and the RRC release message, override between the second indication information in the SIB and the second indication information in the RRC release message needs to be considered, that is, it needs to determine whether the frequency priority corresponding to the selected slice is determined according to the second indication information in the SIB or the second indication information in the RRC release message.

In an embodiment, the second indication information in the RRC release message may override the second indication information carried in the SIB. The second indication information carried in the SIB may be ignored, and when the second indication information in the RRC release message is used to indicate the slice supported by the cell, the slice supported by the selected cell may be determined directly according to the second indication information in the RRC release message.

In an embodiment, the second indication information in the RRC release message and the second indication information carried in the SIB may be considered comprehensively. For example, the slice supported by the selected cell is determined according to the second indication information in the RRC release message, if the slice supported by the selected cell cannot be determined, the slice group supported by the selected slice is determined according to the second indication information in the SIB, the target area to which the selected cell belongs is determined according to the area information sent by the network device, the target mapping relationship corresponding to the target area is determined according to the corresponding relationship, and the slice supported by the selected cell is determined according to the mapping relationship and the slice group supported by the selected cell. Accordingly, it is beneficial to ensure that the slice supported by the selected cell is determined.

In an embodiment, in response to the second indication information being carried in the SIB and the RRC release message, where the second indication information in the RRC release message is used to indicate the slice group supported by the cell and the slice supported by the cell, determining whether the selected cell supports the selected slice further includes: determining the slice supported by the selected cell according to the slice supported by the cell in the second indication information in the RRC release message; or determining the slice group supported by the selected cell according to the slice group supported by the cell in the second indication information in the RRC release message, determining, according to the area information sent by the network device, the target area to which the selected cell belongs, determining the target mapping relationship corresponding to the target area according to the corresponding relationship, and determining the slice supported by the selected cell according to the mapping relationship and the slice group supported by the selected cell; or determining the slice supported by the selected cell according to the slice supported by the cell in the second indication information in the RRC release message, if the slice supported by the selected cell cannot be determined, determining the slice group supported by the selected cell according to the second indication in the SIB information, determining, according to the area information sent by the network device, the target area to which the selected cell belongs, determining the target mapping relationship corresponding to the target area according to the corresponding relationship, and determining the slice supported by the selected cell according to the mapping relationship and the slice group supported by the selected cell; or determining, according to the area information sent by the network device, the target area to which the selected cell belongs, determining the target mapping relationship corresponding to the target area according to the corresponding relationship, and determining the slice group supported by the selected cell according to the slice group supported by the cell in the second indication information in the RRC release message, if the slice group supported by the selected cell cannot be determined, determining the slice group supported by the selected cell according to the second indication information in the SIB, and determining the slice supported by the selected cell according to the mapping relationship and the slice group supported by the selected cell.

In an embodiment, when the second indication information is carried in both the SIB and the RRC release message, override between the second indication information in the SIB and the second indication information in the RRC release message needs to be considered, that is, it needs to determine whether the frequency priority corresponding to the selected slice is determined according to the second indication information in the SIB or the second indication information in the RRC release message.

In an embodiment, the second indication information in the RRC release message may override the first indication information carried in the SIB, and the second indication information carried in the SIB may be ignored.

For example, when the second indication information in the RRC release message is used to indicate the slice supported by the cell, the slice supported by the selected cell may be determined directly according to the second indication information in the RRC release message.

For example, when the second indication information in the RRC release message is used to indicate the slice group supported by the selected cell, the slice group supported by the selected cell is determined according to the slice group supported by the cell in the second indication information in the RRC release message, the target area to which the selected cell belongs is determined according to the area information sent by the network device, the target mapping relationship corresponding to the target area is determined according to the corresponding relationship, and the slice supported by the selected cell is determined according to the mapping relationship and the slice group supported by the selected cell.

In an embodiment, the second indication information in the RRC release message and the second indication information carried in the SIB may be considered comprehensively.

For example, when the second indication information in the RRC release message is used to indicate the slice supported by the cell, the slice supported by the selected cell may be determined according to the second indication information in the RRC release message, if the slice supported by the selected cell cannot be determined, the slice group supported by the selected cell is determined according to the second indication in the SIB information, the target area to which the selected cell belongs is determined according to the area information sent by the network device, the target mapping relationship corresponding to the target area is determined according to the corresponding relationship, and the slice supported by the selected cell is determined according to the mapping relationship and the slice group supported by the selected cell.

For example, when the second indication information in the RRC release message is used to indicate the slice group supported by the cell, the target mapping relationship corresponding to the target area is determined according to the corresponding relationship in the slice-related information, and the slice group supported by the selected cell is determined according to the slice group supported by the cell in the second indication information in the RRC release message, if the slice group supported by the selected cell cannot be determined, the slice group supported by the selected cell is determined according to the second indication information in the SIB, and the slice supported by the selected cell is determined according to the mapping relationship and the slice group supported by the selected cell.

The above embodiments solve the problem of the override between the information related to the slice information in the SIB and the information related to the slice information in the RRC release message when the NAS sends the mapping relationship between the slice group and the slice to the AS, and the SIB carries the information related to the slice information, and the RRC release message also carries the information related to the slice information.

The following several embodiments describe the problem of the override between the information related to the slice information in the SIB and the information related to the slice information in the RRC release message when the NAS does not send the mapping relationship between the slice group and the slice to the AS, but only indicates an identifier of the slice group corresponding to the slice to the AS.

For example, the information related to the slice information is the frequency priority corresponding to the slice information (which may be replaced by the slice information supported by the cell).

In an embodiment, the SIB indicates the frequency priority corresponding to the slice group, and the RRC release message also indicates the frequency priority corresponding to the slice group.

The frequency priority corresponding to the slice group indicated in the SIB may be ignored, and the current mapping relationship corresponding to the current area is determined according to the corresponding relationship in the slice-related information, and the target slice group corresponding to the selected slice is determined according to the current mapping relationship, and the frequency priority corresponding to the target slice group is determined according to the frequency priority corresponding to the slice group indicated by the RRC release message.

Alternatively, the frequency priority corresponding to the slice group indicated by the RRC release message and the frequency priority corresponding to the slice group indicated by the SIB may be considered comprehensively. For example, the current mapping relationship corresponding to the current area is determined according to the corresponding relationship in the slice-related information, the target slice group corresponding to the selected slice is determined according to the current mapping relationship, the frequency priority corresponding to the target slice group is determined according to the frequency priority corresponding to the slice group indicated by the RRC release message, if the frequency priority corresponding to the selected slice cannot be determined, the frequency priority corresponding to the target slice group is determined according to the frequency priority corresponding to the slice group indicated by the SIB.

In an embodiment, the SIB indicates the frequency priority corresponding to the slice group, and the RRC release message indicates the frequency priority corresponding to the slice.

Since the NAS only indicates the identifier of the slice group corresponding to the slice to the AS, the AS cannot understand the frequency priority corresponding to the slice indicated by the RRC release message.

Therefore, the current mapping relationship corresponding to the current area may be determined according to the corresponding relationship in the slice-related information, the target slice group corresponding to the selected slice may be determined according to the current mapping relationship, and the frequency priority corresponding to the target slice group is determined according to the frequency priority corresponding to the slice group indicated by the SIB. This situation is equivalent to a case where the frequency priority corresponding to the slice group indicated by the SIB overrides the frequency priority corresponding to the slice group indicated by the RRC release message.

Alternatively, a legacy frequency priority indicated by the SIB may be determined for the cell reselection. This situation is equivalent to a case where the frequency priority corresponding to the slice group indicated by the RRC release message overrides the frequency priority corresponding to the slice group indicated by the SIB, but because the AS cannot understand the frequency priority corresponding to the slice indicated by the RRC release message, the procedure will go back to performing the cell reselection according to the legacy frequency priority indicated by the SIB.

In an embodiment, when the SIB indicates the frequency priority corresponding to the slice group, and the RRC release message indicates the frequency priority corresponding to the slice group and the slice.

The frequency priority corresponding to the slice group indicated in the SIB may be ignored, and the current mapping relationship corresponding to the current area is determined according to the corresponding relationship in the slice-related information, the target slice group corresponding to the selected slice is determined according to the current mapping relationship, and the frequency priority corresponding to the target slice group is determined according to the frequency priority corresponding to the slice group indicated by the RRC release message.

Alternatively, the frequency priority corresponding to the slice group indicated in the SIB may be ignored, and the current mapping relationship corresponding to the current area is determined according to the corresponding relationship in the slice-related information, the target slice group corresponding to the selected slice is determined according to the current mapping relationship, and the frequency priority corresponding to the target slice group is determined according to the frequency priority corresponding to the slice group indicated by the RRC release message. If the frequency priority corresponding to the selected slice cannot be determined, the legacy frequency priority indicated by the SIB is determined for the cell reselection.

Alternatively, the current mapping relationship corresponding to the current area is determined according to the corresponding relationship in the slice-related information, the target slice group corresponding to the selected slice is determined according to the current mapping relationship, and the frequency priority corresponding to the target slice group is determined according to the frequency priority corresponding to the slice group indicated by the RRC release message. If the frequency priority corresponding to the selected slice cannot be determined, the frequency priority corresponding to the target slice group is determined according to the frequency priority corresponding to the slice group indicated by the SIB.

FIG. 6 is a schematic flow chart illustrating a method for transmitting information according to embodiments of the present invention. The method for transmitting the information shown in the embodiments is performed by a network device, and the network device may be communicated with a terminal, and the terminal includes, but is not limited to, a communication device such as a mobile phone, a tablet computer, a wearable device, a sensor, and an Internet of Things device. The network device includes, but is not limited to, a network device in a 4G, 5G, 6G communication systems, such as a base station, and a core network.

As shown in FIG. 6, the method for indicating the relationship includes the following step.

In S601, information is sent to the terminal described in any of the above embodiments, and/or information sent by the terminal described in any of the above embodiments is received. The terminal may execute the method for indicating the relationship described in any of the foregoing embodiments.

In an embodiment, sending the information to the terminal described in any of the above embodiments includes: sending first indication information to the terminal, where the first indication information is used to indicate a frequency priority corresponding to a slice and/or indicate a frequency priority corresponding to a slice group.

In an embodiment, the first indication information is carried in at least one of: a system information block (SIB); a radio resource control (RRC) release message.

In an embodiment, when the first indication information is carried in the SIB, the first indication information is used to indicate the frequency priority corresponding to the slice group. When the first indication information is carried in the RRC release message, the first indication information is used to indicate the frequency priority corresponding to the slice and/or indicate the frequency priority corresponding to the slice group.

Since the SIB is generally a message broadcast by the network device, it may not be received by a specific terminal, so that there may be security issues to a certain extent. Therefore, when the first indication information is carried in the SIB, the frequency priority corresponding to the specific slice is not indicated, but the frequency priority corresponding to the slice group is indicated.

The RRC release is a unicast message, which will only be received by the specific terminal, so generally there will be no security issues like those for the SIB message. Therefore, when the first indication information is carried in the RRC release, the frequency priority corresponding to the specific slice is indicated and it is also possible to indicate the frequency priority corresponding to the slice group, which may be set as required.

In an embodiment, sending the information to the terminal described in any of the above embodiments includes: sending second indication information to the terminal, where the second indication information is used to indicate slice information supported by a cell.

In an embodiment, the second indication information is carried in at least one of: a system information block (SIB); a radio resource control (RRC) release message.

In an embodiment, when the second indication information is carried in the SIB, the second indication information is used to indicate the slice group supported by the cell. When the second indication information is carried in the RRC release message, the second indication information is used to indicate the slice and/or the slice group supported by the cell.

Since the SIB is generally a message broadcast by the network device, it may not be received by a specific terminal, so that there may be security issues to a certain extent. Therefore, when the second indication information is carried in the SIB, the slice supported by the specific cell is not indicated, but the slice group supported by the cell is indicated.

The RRC release is a unicast message, which will only be received by the specific terminal, so generally there will be no security issues like those for the SIB message. Therefore, when the second indication information is carried in the RRC release, the specific slice supported by the cell is indicated and it is also possible to indicate the slice group supported by the cell, which may be set as required.

In an embodiment, sending the information to the terminal described in any of the above embodiments includes: sending area information to the terminal, where the area information is used for the terminal to determine a target area to which the selected cell belongs.

In an embodiment, the area information includes at least one of: a cell identifier (ID); a tracking area code (TAC).

The area information sent by the network device may include information of a TA (including a current TA and a neighbor TA of the current TA), such as a TA identifier, i.e., TAC, and it is also possible to include information of a cell (including a current cell and a neighbor cell of the current cell), such as the cell ID.

After determining the selected cell, the terminal may determine the area information corresponding to the selected cell, and determine, according to the area information corresponding to the selected cell, the target area to which the selected cell belongs. For example, if it is determined that the area information corresponding to the selected cell is an identifier of TA1, it can be determined that the selected cell belongs to TA1.

Corresponding to the foregoing embodiments of the method for indicating the relationship and the method for transmitting the information, the present invention further provides embodiments of an apparatus for indicating a relationship and an apparatus for transmitting information.

FIG. 7 is a schematic block diagram illustrating an apparatus for indicating a relationship according to embodiments of the present invention. The apparatus for indicating the relationship is applicable to a terminal. The terminal includes, but is not limited to, a communication device such as a mobile phone, a tablet computer, a wearable device, a sensor, and an Internet of Things device. The terminal may be communicated with a network device. The network device includes, but is not limited to, a network device in a 4G, 5G, 6G communication systems, such as a base station, and a core network.

As shown in FIG. 7, the apparatus for indicating the relationship includes a processing module 701 configured to determine a mapping relationship between a slice group and a slice corresponding to an area where the terminal is located and/or an adjacent area of the area by receiving, through an access stratum (AS), an indication from a non-access stratum (NAS).

In an embodiment, the processing module is configured to receive, through the AS, slice-related information sent by the NAS, where the slice-related information includes at least one of: the slice; a slice priority of the slice; the mapping relationship; a corresponding relationship between an effective area of the mapping relationship and the mapping relationship.

In an embodiment, the processing module is configured to perform cell reselection according to the slice-related information.

In an embodiment, the processing module is configured to determine a frequency priority corresponding to the slice and/or the slice group according to first indication information sent by a network device.

In an embodiment, the first indication information is carried in at least one of: a system information block (SIB); a radio resource control (RRC) release message.

In an embodiment, when the first indication information is carried in the SIB, the first indication information is used to indicate the frequency priority corresponding to the slice group. When the first indication information is carried in the RRC release message, the first indication information is used to indicate the frequency priority corresponding to the slice and/or indicate the frequency priority corresponding to the slice group.

In an embodiment, the processing module is configured to select slices one by one in a descending order of the slice priority; determine a frequency priority corresponding to a selected slice.

In an embodiment, the processing module is configured to select a frequency in a descending order of the frequency priority, and determine ranking of all cells corresponding to the selected frequency; select a cell according to the ranking, and determine whether a selected cell supports the selected slice; reselect the selected cell in response to at least satisfying that the selected cell supports the selected slice; select a next cell in the ranking until it is determined that the selected cell supports the selected slice or traverse all cells corresponding to the selected frequency and select a next priority frequency in response to the selected cell not supporting the selected slice.

In an embodiment, the processing module is configured to select a frequency in a descending order of the frequency priority, and determine ranking of all cells corresponding to the selected frequency; select a highest-ranked cell according to the ranking, and determine whether a selected cell supports the selected slice; reselect the highest-ranked cell in response to at least satisfying that the highest-ranked cell supports the selected slice; select a next priority frequency in response to the highest-ranked cell not supporting the selected slice.

In an embodiment, the processing module is configured to determine whether the selected cell supports the selected slice according to second indication information sent by the network device, where the second indication information is used to indicate slice information supported by the cell.

In an embodiment, the second indication information is carried in at least one of: a system information block (SIB); a radio resource control (RRC) release message.

In an embodiment, when the second indication information is carried in the SIB, the second indication information is used to indicate the slice group supported by the cell. When the second indication information is carried in the RRC release message, the second indication information is used to indicate the slice and/or the slice group supported by the cell.

FIG. 8 is a schematic block diagram illustrating an apparatus for transmitting information according to embodiments of the present invention. The apparatus for transmitting the information is applicable to a network device. The network device may be communicated with a terminal, and the terminal includes, but is not limited to, a communication device such as a mobile phone, a tablet computer, a wearable device, a sensor, and an Internet of Things device. The network device includes, but is not limited to, a network device in a 4G, 5G, 6G communication systems, such as a base station, and a core network.

As shown in FIG. 8, the apparatus for transmitting the information includes a communicating module 801 configured to send information to the terminal described in any of the above embodiments, and/or receive information sent by the terminal described in any of the above embodiments.

In an embodiment, the communicating module is configured to send first indication information to the terminal, where the first indication information is used to indicate a frequency priority corresponding to a slice and/or indicate a frequency priority corresponding to a slice group.

In an embodiment, the first indication information is carried in at least one of: a system information block (SIB); a radio resource control (RRC) release message.

In an embodiment, when the first indication information is carried in the SIB, the first indication information is used to indicate the frequency priority corresponding to the slice group. When the first indication information is carried in the RRC release message, the first indication information is used to indicate the frequency priority corresponding to the slice and/or indicate the frequency priority corresponding to the slice group.

In an embodiment, the communicating module is configured to send second indication information to the terminal, where the second indication information is used to indicate slice information supported by a cell.

In an embodiment, the second indication information is carried in at least one of: a system information block (SIB); a radio resource control (RRC) release message.

In an embodiment, when the second indication information is carried in the SIB, the second indication information is used to indicate the slice group supported by the cell. When the second indication information is carried in the RRC release message, the second indication information is used to indicate the slice and/or the slice group supported by the cell.

In an embodiment, the communicating module is configured to send area information to the terminal, where the area information is used for the terminal to determine a target area to which the selected cell belongs.

In an embodiment, the area information includes at least one of: a cell identifier (ID); a tracking area code (TAC).

With regard to the apparatus in the above embodiments, the specific manner in which each module executes operation(s) has been described in detail in the embodiments of related methods, and will not be described in detail here.

As for the apparatus embodiments, since they basically correspond to the method embodiments, details may be referred to the part of the description of the method embodiments. The apparatus embodiments described above are only illustrative, and the modules described as separate components may or may not be physically separated, and the components shown as modules may or may not be physical modules, that is, they may be located in integration, or it may be distributed as multiple network modules. Part or all of the modules may be selected according to actual needs to achieve the purpose of the solution of the embodiments. It can be understood and implemented by those skilled in the art without creative effort.

Embodiments of the present invention further provide a communication device, including: a processor, and a memory for storing a computer program. When the computer program is executed by the processor, the method for indicating the relationship according to any of the above embodiments is implemented.

Embodiments of the present invention further provide a communication device, including: a processor, and a memory for storing a computer program. When the computer program is executed by the processor, the method for transmitting the information according to any of the above embodiments is implemented.

Embodiments of the present invention further provide a computer readable storage medium for storing the computer program. When the computer program is executed by a processor, a step in the method for indicating the relationship according to any of the above embodiments is implemented.

Embodiments of the present invention further provide a computer readable storage medium for storing the computer program. When the computer program is executed by a processor, a step in the method for transmitting the information according to any of the above embodiments is implemented.

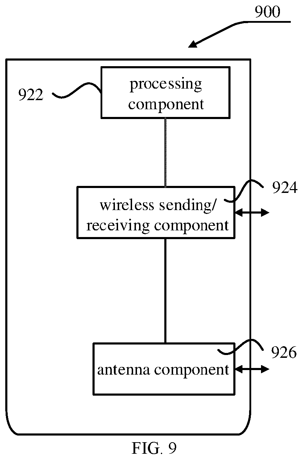

As shown in FIG. 9, FIG. 9 is a schematic block diagram illustrating a device for transmitting information according to embodiments of the present invention. The device 900 may be provided as the base station. Referring to FIG. 9, the device 900 includes a processing component 922, which may further include one or more processors, a wireless sending/receiving component 924, an antenna component 926, and a signal processing portion specific to the wireless interface. One of the processors in the processing component 922 may be configured to implement the method for transmitting the information according to any of the above embodiments.

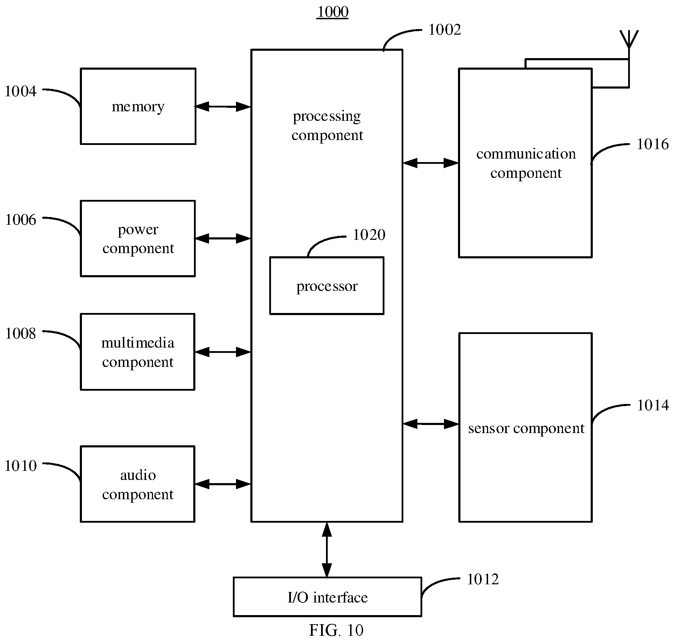

FIG. 10 is a schematic block diagram illustrating a device for indicating a relationship according to embodiments of the present invention. For example, the device 1000 can be a mobile phone, a computer, a digital broadcast terminal, a messaging device, a game console, a tablet device, a medical device, a fitness device, a personal digital assistant, or the like.

Referring to FIG. 10, the device 1000 may include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 typically controls overall operations of the device 1000, such as the operations associated with display, telephone calls, data communications, camera operations, and recording operations. The processing component 1002 may include one or more processors 1020 to execute instructions to perform all or part of the steps in the above described methods. Moreover, the processing component 1002 may include one or more modules which facilitate the interaction between the processing component 1002 and other components. For instance, the processing component 1002 may include a multimedia module to facilitate the interaction between the multimedia component 1008 and the processing component 1002.

The memory 1004 is configured to store various types of data to support the operation of the device 1000. Examples of such data include instructions for any applications or methods operated on the device 1000, contact data, phonebook data, messages, pictures, video, etc. The memory 1004 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the device 1000. The power component 1006 may include a power management system, one or more power sources, and any other components associated with generation, management, and distribution of power in the device 1000.

The multimedia component 1008 includes a screen providing an output interface between the device 1000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1008 includes a front camera and/or a rear camera. The front camera and/or the rear camera may receive an external multimedia datum while the device 1000 is in an operation mode, such as a photographing mode or a video mode. Each of the front camera and the rear camera may be a fixed optical lens system or have focus and optical zoom capability.

The audio component 1010 is configured to output and/or input audio signals. For example, the audio component 1010 includes a microphone (MIC) configured to receive an external audio signal when the device 1000 is in an operation mode, such as a call mode, a recording mode, and a voice recognition mode. The received audio signal may be further stored in the memory 1004 or transmitted via the communication component 1016. In some embodiments, the audio component 1010 further includes a speaker to output audio signals.

The I/O interface 1012 provides an interface between the processing component 1002 and peripheral interface modules, such as a keyboard, a click wheel, a button and the like. The button may include, but not limited to, a home button, a volume button, a starting button, and a locking button.

The sensor component 1014 includes one or more sensors to provide status assessments of various aspects of the device 1000. For instance, the sensor component 1014 may detect an open/closed status of the device 1000, relative positioning of components, e.g., the display and the keypad, of the device 1000, a change in position of the device 1000 or a component of the device 1000, a presence or absence of user contact with the device 1000, an orientation or an acceleration/deceleration of the device 1000, and a change in temperature of the device 1000. The sensor component 1014 may include a proximity sensor configured to detect the presence of nearby objects without any physical contact. The sensor component 1014 may also include a light sensor, such as a CMOS or CCD image sensor, for use in imaging applications. In some embodiments, the sensor component 1014 may further include an accelerometer sensor, a gyroscope sensor, a magnetic sensor, a pressure sensor, or a temperature sensor.

The communication component 1016 is configured to facilitate communication, wired or wirelessly, between the device 1000 and other devices. The device 1000 can access a wireless network based on a communication standard, such as WiFi, 2G, or 3G, or a combination thereof. In an embodiment, the communication component 1016 receives a broadcast signal or broadcast associated information from an external broadcast management system via a broadcast channel. In an embodiment, the communication component 1016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In embodiments, the device 1000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In embodiments, there is further provided a non-transitory computer-readable storage medium (such as the memory 1004) including instructions that, when executed by the processor 1020 of the device 1000, to perform any of the above-described methods. For example, the non-transitory computer-readable storage medium may be a ROM, a RAM, a CD-ROM, a magnetic tape, a floppy disc, an optical data storage device, and the like.

Other embodiments of the present invention will be apparent to those skilled in the art from consideration of the specification and practice of the present invention disclosed here. The present invention is intended to cover any variations, uses, or adaptations of the present invention following the general principles thereof and including common knowledge or conventional technical means known in the art but not disclosed in the present invention. The specification and examples should be considered as exemplary only, with a true scope and spirit of the present invention being indicated by the following claims.

It will be appreciated that the present invention is not limited to the exact construction that has been described above and illustrated in the accompanying drawings, and that various modifications and changes can be made without departing from the scope thereof. The scope of the present invention is only limited by the appended claims.

It is to be noted that in this context, relational terms such as first and second are used solely to distinguish one entity or operation from another entity or operation, it does not necessarily require or imply any such actual relationship or sequence between these entities or operations. The term "comprise", "include" or any other variation thereof is intended to cover a non-exclusive inclusion, so that a process, method, article or device that includes a series of elements does not only include those elements, but also includes other elements that are not explicitly listed, or also includes elements inherent in such a process, method, article or device. Without further restrictions, an element defined by the statement "including a..." does not exclude the existence of another identical element in the process, method, article or device that includes the element.

The methods and devices provided by the embodiments of the present invention have been described in detail above, and specific examples are used to illustrate the principle and implementation of the present invention. The description of the above embodiments is only used to help understand the methods and core ideas of the present invention. At the same time, for those skilled in the art, there will be some changes in the specific implementation and application scope according to the idea of the present invention. In summary, the content of the specification should not be construed as a limitation on the present invention.

## Claims

1. A method for indicating a relationship, performed by a terminal, comprising:
determining a mapping relationship between a slice group and a slice corresponding to an area where the terminal is located and/or an adjacent area of the area by receiving, through an access stratum (AS), an indication from a non-access stratum (NAS).

2. The method according to claim 1, wherein receiving, through the AS, the indication from the NAS comprises:
receiving, through the AS, slice-related information sent by the NAS, wherein the slice-related information comprises at least one of:
the slice;
a slice priority of the slice;
the mapping relationship;
a corresponding relationship between an effective area of the mapping relationship and the mapping relationship.

3. The method according to claim 2, further comprising:
performing cell reselection according to the slice-related information.

4. The method according to claim 3, further comprising:
determining a frequency priority corresponding to the slice and/or the slice group according to first indication information sent by a network device.

5. The method according to claim 4, wherein the first indication information is carried in at least one of:
a system information block (SIB);
a radio resource control (RRC) release message.

6. The method according to claim 5, wherein when the first indication information is carried in the SIB, the first indication information is used to indicate the frequency priority corresponding to the slice group;
when the first indication information is carried in the RRC release message, the first indication information is used to indicate the frequency priority corresponding to the slice and/or indicate the frequency priority corresponding to the slice group.

7. The method according to claim 6, wherein performing the cell reselection according to the slice-related information comprises:
selecting slices one by one in a descending order of the slice priority;
determining a frequency priority corresponding to a selected slice.

8. The method according to claim 7, further comprising:
selecting a frequency in a descending order of the frequency priority, and determining ranking of all cells corresponding to the selected frequency;
selecting a cell according to the ranking, and determining whether a selected cell supports the selected slice;
reselecting the selected cell in response to at least satisfying that the selected cell supports the selected slice;
selecting a next cell in the ranking until it is determined that the selected cell supports the selected slice or traversing all cells corresponding to the selected frequency and selecting a next priority frequency in response to the selected cell not supporting the selected slice.

9. The method according to claim 7, further comprising:
selecting a frequency in a descending order of the frequency priority, and determining ranking of all cells corresponding to the selected frequency;
selecting a highest-ranked cell according to the ranking, and determining whether a selected cell supports the selected slice;
reselecting the highest-ranked cell in response to at least satisfying that the highest-ranked cell supports the selected slice;
selecting a next priority frequency in response to the highest-ranked cell not supporting the selected slice.

10. The method according to claim 8 or 9, wherein determining whether the selected cell supports the selected slice comprises:
determining whether the selected cell supports the selected slice according to second indication information sent by the network device, wherein the second indication information is used to indicate slice information supported by the cell.

11. The method according to claim 10, wherein the second indication information is carried in at least one of:
a system information block (SIB);
a radio resource control (RRC) release message.

12. The method according to claim 11, wherein when the second indication information is carried in the SIB, the second indication information is used to indicate the slice group supported by the cell;
when the second indication information is carried in the RRC release message, the second indication information is used to indicate the slice and/or the slice group supported by the cell.

13. A method for transmitting information, performed by a network device, comprising:
sending information to the terminal according to any one of claims 1 to 12, and/or receiving information sent by the terminal according to any one of claims 1 to 11.

14. The method according to claim 13, wherein sending the information to the terminal according to any one of claims 1 to 11 comprises:
sending first indication information to the terminal, wherein the first indication information is used to indicate a frequency priority corresponding to a slice and/or indicate a frequency priority corresponding to a slice group.

15. The method according to claim 14, wherein the first indication information is carried in at least one of:
a system information block (SIB);
a radio resource control (RRC) release message.

16. The method according to claim 15, wherein when the first indication information is carried in the SIB, the first indication information is used to indicate the frequency priority corresponding to the slice group;
when the first indication information is carried in the RRC release message, the first indication information is used to indicate the frequency priority corresponding to the slice and/or indicate the frequency priority corresponding to the slice group.

17. The method according to claim 13, wherein sending the information to the terminal according to any one of claims 1 to 11 comprises:
sending second indication information to the terminal, wherein the second indication information is used to indicate slice information supported by a cell.

18. The method according to claim 17, wherein the second indication information is carried in at least one of:
a system information block (SIB);
a radio resource control (RRC) release message.

19. The method according to claim 18, wherein when the second indication information is carried in the SIB, the second indication information is used to indicate the slice group supported by the cell;
when the second indication information is carried in the RRC release message, the second indication information is used to indicate the slice and/or the slice group supported by the cell.

20. The method according to claim 17, wherein sending the information to the terminal according to any one of claims 1 to 11 further comprises:
sending area information to the terminal, wherein the area information is used for the terminal to determine a target area to which a selected cell belongs.

21. The method according to claim 20, wherein the area information comprises at least one of:
a cell identifier (ID);
a tracking area code (TAC).

22. An apparatus for indicating a relationship, applicable to a terminal, comprising:
a processing module configured to determine a mapping relationship between a slice group and a slice corresponding to an area where the terminal is located and/or an adjacent area of the area by receiving, through an access stratum (AS), an indication from a non-access stratum (NAS).

23. An apparatus for transmitting information, applicable to a network device, comprising:
a communicating module configured to send information to the terminal according to claim 19, and/or receive information sent by the terminal according to claim 19.

24. A communication device, comprising:
a processor; and
a memory for storing a computer program that, when executed by the processor, causes the method for indicating the relationship according to any one of claims 1 to 12 to be implemented.

25. A communication device, comprising:
a processor; and
a memory for storing a computer program that, when executed by the processor, causes the method for transmitting the information according to any one of claims 13 to 21 to be implemented.

26. A computer-readable storage medium having stored therein a computer program that, when executed by a processor, causes the method for indicating the relationship according to any one of claims 1 to 12 to be implemented.

27. A computer-readable storage medium having stored therein a computer program that, when executed by a processor, causes the method for transmitting the information according to any one of claims 13 to 21 to be implemented.
